(19) Europäisches Patentamt
European Patent Office
Office européen des brevets

(11) EP 2 535 381 B1

(12) **EUROPEAN PATENT SPECIFICATION**

(45) Date of publication and mention of the grant of the patent:
**22.02.2017 Bulletin 2017/08**

(51) Int Cl.:
***C09D 11/00*** *(2014.01)* ***C09D 11/322*** *(2014.01)*
***C09D 11/38*** *(2014.01)*

(21) Application number: **12170503.2**

(22) Date of filing: **01.06.2012**

(54) **Image forming method**

Bilderzeugungsverfahren

Procédé de formation d'images

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.06.2011 JP 2011135770**
**15.05.2012 JP 2012111767**

(43) Date of publication of application:
**19.12.2012 Bulletin 2012/51**

(73) Proprietor: **Fujifilm Corporation**
**Minato-ku**
**Tokyo (JP)**

(72) Inventors:
- **Shinohara, Ryuji**
**Ashigarakami-gun, Kanagawa 258-8577 (JP)**
- **Wachi, Naotaka**
**Ashigarakami-gun, Kanagawa 258-8577 (JP)**

(74) Representative: **Höhfeld, Jochen et al**
**Klunker Schmitt-Nilson Hirsch**
**Patentanwälte**
**Destouchesstrasse 68**
**80796 München (DE)**

(56) References cited:
**EP-A1- 1 156 086** **EP-A1- 1 586 454**
**EP-A2- 1 650 272** **WO-A1-2009/134247**
**US-A1- 2007 076 071** **US-A1- 2007 129 462**
**US-A1- 2008 178 762**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

## BACKGROUND OF THE INVENTION

1. Field of the Invention

The present invention relates to an image forming method in which an aqueous ink composition is used.

2. Description of the Related Art

In recent years, due to advancement of ink jet recording techniques, image forming techniques employing an ink jet method as a method for forming high-definition images, which were for the purpose of use in photographs or offset printing, have been proposed, and there is a demand for the ink jet method to have a capability of forming high-quality images at a high speed.

In recent years, there has been a tendency of an increasing demand for high-speed image formation. For example, in a system that renders images at a high speed using roll paper, abrasion resistance after rendering becomes important. That is, in a case in which the abrasion resistance of an image is poor, when sheets of roll paper with rendered images are stacked within a short time from rendering, and the sheets of paper come into contact with each other, and are abraded, there are cases in which the images become blurred, and lose their product value.

Specifically, when the abrasion resistance of a rendered image is poor, there are cases in which problems occur such that letters smear when letter images are rendered, letters become unreadable when hollow letters are rendered, or bar codes or QR codes cannot be properly scanned when bar codes or QR code images are rendered. The above phenomena are highly likely to occur particularly on paper which easily holds ink in the surface, for example, ink jet paper having no porous absorbing layer.

Meanwhile, as ink techniques, there are techniques that improve the permeability of ink into paper. In this case, since ink is liable to permeate into paper, the abrasion resistance of images improves, but the optical density (OD) degrades, and a phenomenon in which the ink passes through the paper and diffuses to the rear surface (strike-through) is noticeably exhibited. Therefore, simply increasing the ink permeability consequently leads to a problem of an inability of rendering images on both surfaces. In addition, when images are rendered using multiple colors, such as red, green, and blue, there is another problem in that the respective color inks spread in paper and mix together such that the color gamut of secondary colors degrades. Such a phenomenon is highly likely to occur particularly in paper into which ink can easily permeate, for example, plain paper.

As ink that is used in the ink jet method, aqueous inks are gaining attention in terms of environmental protection, and the like. For example, aqueous inks containing ethylene oxide or propylene oxide adducts of glycerin have been disclosed from the viewpoint of the ejection stability, printing qualities, such as bleeding resistance in plain paper, and the like of the ink (for example, refer to JP2009-191135A, JP2005-82613A, WO2001/048101A, JP1992-18465A (JP-H4-18465A), JP2004-51779A).

## SUMMARY OF THE INVENTION

However, all of the above techniques in the related art have been made in consideration of the ejection performance of ink, bleeding of images, and the like, which are liable to occur during rendering, and there is a concern that images may lack abrasion resistance when images are rendered at a high speed. In addition, in a recording system that renders images at a high speed, generally, ink that can permeate into paper rapidly is desired, and such ink can increase the speed of rendering images on a single surface, but cannot solve the strike-through phenomenon of ink, which causes a difficulty of rendering images on both sides.

The invention has been made in consideration of the above circumstances, and an object of the invention is to provide an image forming method in which ink permeation toward the rear surface is suppressed, and images having excellent abrasion resistance (sometimes also referred to as rub fastness) compared to the related art are formed in a case in which images are rendered at a high speed using an arbitrary recording medium, such as plain paper or ink jet paper.

Specific measures for achieving the above object are as follows.

<1> An image forming method having an ink supplying process in which an ink composition including a pigment, a pyrrolidone derivative, a compound represented by the following structural formula (I), and water is supplied to a recording medium that is transported in a vertical scanning direction at a transportation speed of 80 m/min or more so as to form images.

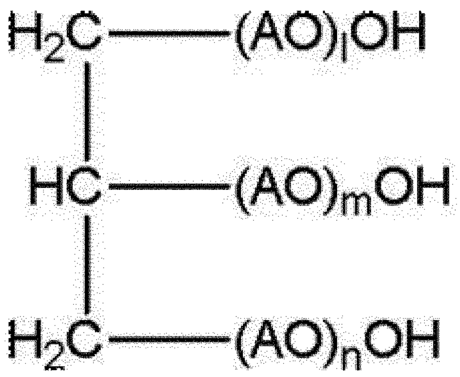

Structural Formula (I)

In the structural formula (I), 1, m, and n are respectively an integer of 1 or more, and 1 + m + n indicates 3 to 15. AO represents at least one of ethyleneoxy and propyleneoxy.

<2> The image forming method according to the above <1>, in which the content ratio (p/s; mass ratio) of the pyrrolidone derivative (p) to the compound (s) represented by the structural formula (I) is 0.075 to 4.0.

<3> The image forming method according to the above <1> or <2>, in which the pyrrolidone derivative is at least one of 2-pyrrolidone and N-methyl-2-pyrrolidone.

<4> The image forming method according to any one of the above <1> to <3>, in which AO in the structural formula (I) is propylene oxy.

<5> The image forming method according to any one of the above <1> to <4>, in which the pigment is a resin-coated pigment being coated at least a part of the pigment surface with a crosslinked polymer obtained by crosslinking a water-soluble resin with a crosslinking agent.

<6> The image forming method according to the above <5>, in which the water-soluble resin includes a carboxylic group or a salt of the carboxylic group in the molecule, and the crosslinking agent is a bifunctional or more epoxy compound.

<7> The image forming method according to any one of the above <1> to <6>, in which the content of the compound represented by the structural formula (I) is 5.0 mass% to 40.0 mass% with respect to the total mass of the ink composition.

<8> The image forming method according to any one of the above <1> to <7>, in which the content of the pyrrolidone derivative is 3.0 mass% to 20.0 mass% with respect to the total mass of the ink composition.

<9> The image forming method according to any one of the above <1> to <8>, in which the ink composition further includes resin particles.

According to the invention, it is possible to provide an image forming method in which ink permeation toward the rear surface is suppressed, and images having excellent rub fastness compared to the related art are formed in a case in which images are rendered at a high speed using an arbitrary recording medium, such as plain paper or ink jet paper.

## DESCRIPTION OF THE PREFERRED EMBODIMENTS

Hereinafter, the image forming method of the invention will be described in detail.

The image forming method of the invention is configured by providing an ink supplying process in which an ink composition including a pigment, a pyrrolidone derivative, a compound represented by the following structural formula (I), and water is supplied to a recording medium that is transported at a transportation speed of 80 m/min or more so as to form images. The image forming method of the invention may be further provided with other processes, such as heating and fixing formed images, according to necessity.

In the invention, in a case in which ink jet recording is carried out at a high speed so that the transportation speed of a recording medium becomes 80 m/min or more when measured at the ejection head, for example, in a case in which images are sequentially rendered at a high speed using roll paper, permeation of ink into paper is suppressed when images are formed at a high speed, and an image strength with which image defects, such as damage, are not easily caused after formation of the images is maintained by configuring an ink composition being used using a pyrrolidone derivative and a glycerin-based compound having a specific structure. Thereby, in a case in which images are rendered at a high speed on a recording medium that is transported at a high speed of 80 m/min or more, the strike-through phenomenon in which ink diffuses to the rear surface of the recording medium is prevented, and it is possible to produce images which are excellent in terms of the abrasion resistance compared to ink images in the related art, which are rendered at a high speed by the ink jet method, and in which occurrence of image defects, such as damage, is prevented.

Hereinafter, the ink supplying process that configures the image forming method of the invention and other processes that can be provided according to necessity will be described in detail.

- Ink supplying process -

In the ink supplying process of the invention, the ink composition including a pigment, a pyrrolidone derivative, a compound represented by the following structural formula (I), and water is supplied to a recording medium that is transported at a transportation speed of 80 m/min or more when forming images.

In the ink supplying process of the invention, the transportation speed of a recording medium being transported is set to 80 m/min or more, and many sheets of images are formed at a high speed. Generally, in a case in which the transportation speed is high, when a landed ink composition rapidly permeates into the recording medium, or images cannot maintain a certain strength within a short time, the recording media abrade each other such that the image qualities are liable to degrade, and this phenomenon easily occurs particularly at a transportation speed in a range of 80 m/min or more.

From the viewpoint of an increase in the speed of image formation, the transportation speed is preferably higher. The transportation speed is more preferably 100 m/min or more, and still more preferably 150 m/min or more. The upper limit of the transportation speed is not particularly limited, but is desirably 350 m/min from the viewpoint of a necessity of stably transporting the recording media.

Formation of images using the ink jet method can be carried out by supplying energy so as to eject the ink composition to a desired recording medium. Meanwhile, as a preferable image forming method of the invention, the method as described in paragraphs 0093 to 0105 of JP2003-306623A can be applied.

The ink jet method is not particularly limited, and may be any of well-known methods, for example, a charge control method in which ink is ejected using electrostatic attraction, a piezo ink jet method in which ink is ejected using a piezoelectric element that causes mechanical strains by applying a voltage, an acoustic ink jet method in which ink is ejected by converting an electric signal into an acoustic beam, irradiating the acoustic beam to the ink, and using a radiation force, a thermal ink jet (bubble jet (registered trademark)) method in which ink is heated so as to form air bubbles, and a generated pressure is used, and the like.

Meanwhile, the ink jet method includes a method in which a small volume of an ink having a low concentration, which is termed photo ink, is injected multiple times, a method in which a plurality of inks having substantially the same hue and different concentrations are used so as to improve image qualities, and a method in which a colorless and transparent ink is used.

As the ink jet method of the invention, the piezo ink jet method is preferred. The continuous ejection properties and ejection stability of the ink is further improved by combining the ink composition of the invention or an ink set including the ink composition of the invention with the piezo ink jet method. In the piezo ink jet method, the strain form of the piezoelectric element may be any of a bending mode, a vertical mode, and a shear mode. The structure of the piezoelectric element and the structure of the piezo head are not particularly limited, and well-known techniques can be employed.

The ink nozzles and the like that are used when recording is carried out by the ink jet method are not particularly limited, and can be appropriately selected according to purpose.

The ink jet method that is applicable to the invention may be a shuttle method in which recording is carried out while the head is scanned in the width direction of a recording medium using a short serial head as long as the transportation speed is maintained at 80 m/min or more as described above, but an aspect is preferred in which a line method is applied in which a line head having recording elements arrayed correspondingly to the entire area of one side of a recording medium is used. In the case of the line method, images can be recorded on the entire surface of a recording medium by scanning the recording medium in a direction perpendicular to the array direction (main scanning direction) of the recording elements (hereinafter sometimes referred to as the vertical scanning direction). Meanwhile, in the invention, the transportation speed of 80 m/min or more indicates that a recording medium is transported in the vertical scanning direction at a transportation speed of 80 m/min or more. That is, the image forming method of the invention has the ink supplying process in which the ink composition is supplied to a recording medium that is transported in the vertical scanning direction at a transportation speed of 80 m/min or more.

The amount of droplets of the ink composition being ejected is preferably 0.5 pl (picoliter) to 6 pl, more preferably 1 pl to 5 pl, and still more preferably 2 pl to 4 pl from the viewpoint of producing high-definition images.

Next, the detail of the ink composition of the invention will be described.

(Pigment)

The invention contains at least one pigment. The pigment can be appropriately selected according to purpose, and may be any of an organic pigment or an inorganic pigment.

Examples of the organic pigment include an azo pigment, a polycyclic pigment, a dye chelate, a nitro pigment,

a nitroso pigment, aniline black, and the like. Among them, an azo pigment, a polycyclic pigment, and the like are more preferred. Examples of the azo pigment include an azo lake, an insoluble azo pigment, a condensed azo pigment, a chelate azo pigment, and the like. Examples of the polycyclic pigment include a phthalocyanine pigment, a perynone pigment, a peryline pigment, an anthraquinone pigment, a quinacridone pigment, an oxazine pigment, an indigo pigment, a thioindigo pigment, an isoindolinone pigment, a quinophthalone pigment, and the like. Examples of the dye chelates include a basic dye chelate, an acidic dye chelate, and the like.

Examples of the inorganic pigment include titanium oxide, iron oxide, calcium carbonate, barium sulfate, aluminum hydroxide, barium yellow, cadmium red, chromium yellow, carbon black, and the like. Among them, carbon black is particularly preferred. Meanwhile, examples of the carbon black include carbon blacks manufactured by a well-known method, such as a contact method, a furnace method, a thermal method, or the like. Among the above pigments, a water-dispersible pigment is preferred.

Specific examples of the water-dispersible pigment include pigments of the following (1) to (4).

(1) An encapsulated pigment, that is, a dispersed polymer obtained by including a pigment in polymer fine particles, and, in more detail, a pigment in which a pigment is made to be dispersible in water by coating the pigment with a hydrophilic insoluble resin and making the resin layer on the pigment surface hydrophilic.

(2) A self-dispersible pigment, that is, a pigment which has at least one kind of hydrophilic group on the surface, and is at least either water-dispersible or water-soluble in the absence of a dispersant, and, in more detail, a pigment in which mainly carbon black or the like is made to be hydrophilic through a surface oxidation treatment, and the pigment is made to be self-dispersible in water.

(3) A resin-dispersed pigment, that is, a pigment dispersed by a water-soluble polymer compound having a weight average molecular weight of 50,000 or less.

(4) A surfactant-dispersed pigment, that is, a pigment dispersed by a surfactant.

Here, (1) the encapsulated pigment will be described in detail.

The resin of the encapsulated pigment is not limited, but is preferably a polymer compound that is self-dispersible or soluble in a solvent mixture of water and a water-soluble organic solvent, and has an anionic group (acidic). Generally, the number average molecular weight of the resin is preferably in a range of approximately 1,000 to 100,000, and particularly preferably in a range of approximately 3,000 to 50,000. In addition, the resin is preferably dissolved in an organic solvent so as to form a solution. When the number average molecular weight of the resin is in the above ranges, in the pigment, the resin can exhibit a function of a coated film or a paint film when the pigment is made into an ink. The resin is preferably used in the form of a salt of an alkali metal or an organic amine.

Specific examples of the resin of the encapsulated pigment include a thermoplastic, thermosetting, or modified acrylic, epoxy-based, polyurethane-based, polyether-based, polyamide-based, unsaturated polyester-based, phenol-based, silicone-based, or fluorine-based resin; a polyvinyl-based resin, such as vinyl chloride, vinyl acetate, polyvinyl alcohol, and polyvinyl butyral; a polyester-based resin, such as an alkyd resin and a phthalate resin; an amino-based material, such as a melamine resin, a melamine formaldehyde resin, an amino alkyd co-condensed resin, and a urea resin; and a material having an anionic group, such as copolymers or mixtures of the above.

Among the above resins, the anionic acrylic resin is produced by polymerizing an acrylic monomer having an anionic group (hereinafter referred to as the acrylic monomer having an anionic group) and other monomers that can be copolymerized with the anionic group-containing acrylic monomer according to necessity in a solvent. Examples of the anionic group-containing acrylic monomer include acrylic monomers having one or more anionic groups selected from a group consisting of a carboxylic group, a sulfonate group, and a phosphonic group, and, among them, an acrylic monomer having a carboxylic group is particularly preferred. Specific examples of the acrylic monomer having a carboxylic group include acrylic acid, methacrylic acid, crotonic acid, ethacrylic acid, propylacrylic acid, isopropylacrylic acid, itaconic acid, fumaric acid, and the like. Among them, acrylic acid or methacrylic acid is preferred.

The encapsulated pigment can be manufactured by a physical or chemical method in the related art using the above components. For example, the encapsulated pigment can be manufactured by the method as described in JP1997-151342A (JP-H9-151342A), JP1998-140065A (JP-H10-140065A), JP1999-209672A (JP-H11-209672A), JP1999-172180A (JP-H11-172180A), JP1998-25440A (JP-H10-25440A), or JP1999-43636A (JP-H11-43636A). Specifically, the method includes the phase inversion emulsification method and the acid deposition method as described in JP1997-151342A (JP-H9-151342A) and JP1998-140065A (JP-H10-140065A), and, among the above, the phase inversion emulsification method is preferred in terms of dispersion stability. The phase inversion emulsification method will be described below.

In addition, the self-dispersible pigment is also one of the preferable examples. The self-dispersible pigment refers to a pigment that can be dispersed in an aqueous solvent without using a dispersant for pigment dispersion since a number of hydrophilic functional groups and/or salts thereof (hereinafter referred to as the "dispersibility-supplying group") are combined to the pigment surfaces directly or indirectly through an alkyl group, an alkyl ether group, an aryl

group, or the like. Here, "being dispersed in an aqueous solvent without using a dispersant" means that the pigment can be dispersed in an aqueous solvent without using a dispersant for dispersing the pigment.

Generally, ink that contains the self-dispersible pigment as a colorant does not need to contain a dispersant that is included to disperse the pigment, and therefore release of bubbles due to degradation of the deforming properties, which is caused by a dispersant, rarely occurs, and ink that is excellent in terms of ejection stability is easily prepared. Examples of the dispersibility-supplying group that is combined to the surface of the self-dispersible pigment include -COOH, -CO, -OH, $-SO_3H$, $-PO_3H_2$, quaternary ammonium, and salts thereof, and the dispersibility-supplying group is combined by performing a physical treatment or a chemical treatment on the pigment so as to combine (graft) a dispersibility-supplying group or an active species having a dispersibility-supplying group to the pigment surfaces. Examples of the physical treatment include a vacuum plasma treatment and the like. In addition, examples of the chemical treatment include a wet oxidation method in which the pigment surface is oxidized in water using an oxidant, a method in which p-aminobenzoic acid is combined to the pigment surfaces so as to combine a carboxylic group through a phenyl group, and the like.

In the invention, a self-dispersible pigment, the surface of which is treated by an oxidation treatment using hypohalous acid and/or a salt of hypohalous acid, or an oxidation treatment using ozone can be exemplified. A commercially available product may be used as the self-dispersible pigment, and specifically includes MICRO JET CW-1 (manufactured by Orient Chemical Industries, Ltd.), CAB-O-JET 200, CAB-O-JET 300 (manufactured by Cabot Corporation), and the like.

As the pigment, an encapsulated pigment in which at least a part of the pigment surface is coated with a water-insoluble resin among pigment dispersants, for example, a polymer emulsion containing a pigment in water-insoluble resin particles is preferred, and, more specifically, a water-dispersible pigment in which at least a part of the pigment surface is coated with a water-insoluble resin so as to form a resin layer on the pigment surface, thereby being dispersible in water is preferred. Use of an encapsulated pigment coated with the water-insoluble resin is preferred from the viewpoint of aggregation of the pigment, and is preferred since high-resolution images can be formed in the case of high-speed recording.

Here, the phase inversion emulsification method will be described.

The phase inversion emulsification method is basically a self-dispersion (phase inversion emulsification) method in which a molten mixture of a resin that is self-dispersible or soluble and a pigment is dispersed in water. In addition, the molten mixture may be prepared by including the polymer compound or a curing agent. Here, the molten mixture includes any of a mixture in a state in which the resin and the pigment are not dissolved but mixed, a mixture in a state in which the resin and the pigment are dissolved and mixed, and a mixture in a state in which some of the resin and the pigment are dissolved and mixed, but some are merely mixed. More specific "phase inversion emulsification methods" include the methods as described in JP1998-140065A (JP-H10-140065A).

Meanwhile, regarding more specific methods of the phase inversion emulsification method and the acid deposition method, description in JP1997-151342A (JP-H9-151342A) and JP1998-140065A (JP-H10-140065A) can be referenced.

- Pigment dispersant -

A pigment dispersant can ease dispersion when the pigment is dispersed, and stabilize dispersion after dispersion. The pigment dispersant includes a nonionic compound, an anionic compound, a cationic compound, an amphoteric compound, and the like. Examples thereof include copolymers of monomers having an $\alpha,\beta$-ethylenic unsaturated group, and the like. Examples of a monomer having an $\alpha,\beta$-ethylenic unsaturated group include ethylene, propylene, butene, pentene, hexene, vinyl acetate, aryl acetate, acrylic acid, methacrylic acid, crotonic acid, crotonic acid ester, itaconic acid, itaconic acid monoester, maleic acid, maleic acid monoester, maleic acid diester, fumaric acid, fumaric acid monoester, vinyl sulfonic acid, styrene sulfonic acid, sulfonated vinyl naphthalene, vinyl alcohol, acrylamide, methacryloxy ethyl phosphate, bismethacryloxyethyl phosphate methacryloxyethyl phenyl hydrogen phosphate, ethylene glycol dimethacrylate, diethylene glycol dimethacrylate, styrene, $\alpha$-methylstyrene, styrene derivatives of vinyl toluene, vinyl cyclohexane, vinyl naphthalene, vinyl naphthalene derivatives, alkyl acrylate in which the aromatic group may be substituted, phenyl acrylate, alkyl methacrylate in which the aromatic group may be substituted, phenyl methacrylate, cycloalkyl methacrylate, alkyl crotonate, dialkyl itaconate, dialkyl maleate, derivatives of the above compounds, and the like.

A copolymer obtained by copolymerizing a single or plural monomers having the $\alpha,\beta$-ethylenic unsaturated group can be used as a polymer dispersant. Specific examples thereof include an alkyl acrylate-acrylic acid copolymer, an alkyl methacrylate-methacrylic acid copolymer, a styrene-alkyl acrylate-acrylic acid copolymer, a styrene-phenyl methacrylate-methacrylic acid copolymer, a styrene-cyclohexyl methacrylate-methacrylic acid copolymer, a styrene-styrene sulfonic acid copolymer, a styrene-maleic acid copolymer, a styrene-methacrylic acid copolymer, a styrene-acrylic acid copolymer, a vinyl naphthalene-maleic acid copolymer, a vinyl naphthalene-methacrylic acid copolymer, a

vinyl naphthalene-acrylic acid copolymer, polystyrene, polyester, polyvinyl alcohol, and the like.

The weight average molecular weight of the pigment dispersant is preferably 2,000 to 60,000.

The amount of the pigment dispersant with respect to the pigment is preferably in a range of 10% to 100% of the pigment, more preferably 20% to 70% of the pigment, and still more preferably 40% to 50% of the pigment in terms of mass.

In addition, the pigment in the invention is preferably a resin-coated pigment in which at least a part of the pigment surface is coated with a crosslinked polymer obtained by crosslinking a water-soluble resin using a crosslinking agent. The water-soluble resin serves as a dispersant that disperses the pigment. Since the pigment is coated with a crosslinked polymer, excellent stability (stability with respect to pH changes and stability with respect to temperature changes) can be supplied when a pigment-dispersed substance is produced or an ink composition is produced using the pigment-dispersed substance.

The water-soluble resin includes polyvinyls, polyurethanes, polyesters, and the like, and, among them, polyvinyls are preferred.

The water-soluble resin has a group that causes a crosslinking reaction by a crosslinking agent in the molecule. The group is not particularly limited, and includes a carboxylic group and salts thereof, an isocyanate group, an epoxy group, and the like. In the invention, the water-soluble resin preferably has a carboxylic group or salts thereof from the viewpoint of dispersibility improvement.

The water-soluble resin that can be used in the invention is preferably a copolymer obtained using a carboxylic group-containing monomer as a copolymer component. The carboxylic group-containing monomer includes methacrylic acid, β-carboxyethyl acrylate, fumaric acid, itaconic acid, malic acid, crotonic acid, and the like, and, among them, methacrylic acid or β-carboxyethyl acrylate is preferred from the viewpoint of crosslinking properties and dispersion stability.

In addition, an arbitrarily selected hydrophilic monomer and hydrophobic monomer can be used as a copolymer component in addition to the carboxylic group-containing monomer. The hydrophilic monomer may be ionic or nonionic. The hydrophobic monomer is not particularly limited, but is preferably an alkyl methacrylate having 1 to 20 carbon atoms or alkyl acrylate having 1 to 20 carbon atoms.

The water-soluble resin may be any of a random polymer and a block or graft polymer.

The acid value (the mg number of KOH necessary to neutralize 1 g of the water-soluble resin) of the water-soluble resin is preferably 135 mgKOH/g to 250 mgKOH/g, more preferably 135 mgKOH/g to 200 mgKOH/g, and particularly preferably 135 mgKOH/g to 180 mgKOH/g from the viewpoint of the dispersibility and dispersion stability of the pigment.

The method of synthesizing a polymer as the water-soluble resin is not particularly limited, but random polymerization of a vinyl monomer is preferred in terms of dispersion stability.

A compound having two or more portions at which a crosslinking reaction occurs can be used as the crosslinking agent, and, among them, a bifunctional or more epoxy compound is preferred due to the excellent reactivity with a carboxylic group. Specific examples of the bifunctional or more epoxy compound include ethylene glycol diglycidyl ether, polyethylene glycol diglycidyl ether, 1,6-hexanediol glycidyl ether, diethylene glycol diglycidyl ether, polyethylene glycol diglycidyl ether, dipropylene glycol diglycidyl ether, polypropylene glycol diglycidyl ether, and the like, and polyethylene glycol diglycidyl ether or diethylene glycol diglycidyl ether are preferred.

The molar ratio of the crosslinking portions of the crosslinking agent to the crosslinked portions of the water-soluble resin is preferably 1:1.1 to 1:10, more preferably 1:1.1 to 1:5, and most preferably 1:1.1 to 1:3 from the viewpoint of the crosslinking reaction rate and the stability of a dispersion liquid after crosslinking.

The amount of the water-soluble resin with respect to the pigment is preferably 10 mass% to 250 mass%, more preferably 10 mass% to 200 mass%, still more preferably 20 mass% to 150 mass%, and particularly preferably 30 mass% to 100 mass%.

The resin-coated pigment having the pigment surface coated with a crosslinkked polymer obtained by crosslinking a water-soluble resin using a crosslinking agent can be produced by undergoing a process in which the pigment is dispersed using the water-soluble resin, and then crosslinked using a crosslinking agent. A method in which the following processes (1) to (3) are carried out will be shown as an example of the preferable preparation method.

(1) A dispersion process in which a pigment and a water-soluble resin are dispersed in water or an aqueous solution of a polar solvent so as to produce a pigment-dispersed liquid

(2) A crosslinking process in which a crosslinking agent is added to the pigment-dispersed liquid produced in the (1), heated, and crosslinked so as to coat a polymer in which the pigment surfaces are crosslinked

(3) A process in which a resin-coated pigment that is coated with the crosslinked polymer is purified

In addition to the above processes, other processes may be appropriately provided according to necessity. In the process (1), a well-known solvent can be appropriately used as the polar solvent and the like.

The pigment may be used singly, or in combination of plural kinds selected from each of the respective groups or the respective groups.

The content of the pigment in the ink composition is preferably 0.1 mass% to 15 mass%, more preferably 0.5 mass% to 12 mass%, and particularly preferably 1 mass% to 10 mass% with respect to the total mass of the ink in terms of color density, granularity, ink stability, and ejection reliability.

(Pyrrolidone derivative)

The invention contains at least one kind of pyrrolidone derivative. When a composition including a compound represented by the following structural formula (I) further includes a pyrrolidone derivative, the strike-through phenomenon of ink is prevented, the rub fastness of images improves, and abrasion problems, such as damage on images, are prevented in a case in which plural sheets are treated at a high speed.

The pyrrolidone derivative in the invention which can be used includes a compound having a 5-membered ring including a random structure. The random structure is a structure including -CO-NR- at a certain part of the ring, and R in the structure indicates a monovalent group.

The monovalent group includes a hydrogen atom, an alkyl group, an aryl group, an alkenyl group, and the like. Among them, a hydrogen atom or an alkyl group is preferred, and a hydrogen atom is more preferred.

The alkyl group, the aryl group, and the alkenyl group may or may not have a substituent, but preferably do not have a substituent.

In a case in which the R is an alkyl group, the number of carbon atoms included in the alkyl group is preferably 1 to 10, more preferably 1 to 6, and particularly preferably 1 to 4. The alkyl group may have a straight chain structure, a branched structure, or a cyclic structure. Examples of the alkyl group include a methyl group, an ethyl group, a propyl group, an isopropyl group, a butyl group, an isobutyl group, a sec-butyl group, a tert-butyl group, a pentyl group, an isopentyl group, a neopentyl group, an octyl group, a nonyl group, a decyl group, a cyclopropyl group, a cyclobutyl group, a cyclopentyl group, a cyclohexyl group, a cycloheptyl group, a cyclooctyl group, and the like.

In a case in which the alkyl group has a substituent, examples of the substituent include an alkoxy group having 1 to 8 carbon atoms, an aryl group having 6 to 14 carbon atoms, a hydroxyl group, a carboxyl group, a halogen atom (a fluorine atom, a chlorine atom, an iodine atom, and the like), and the like.

In a case in which the R is an aryl group, the number of carbon atoms included in the aryl group is preferably 6 to 20, more preferably 6 to 14, and particularly preferably 6 to 10. Specific examples of the aryl group include a phenyl group, a naphthyl group, an anthryl group, and the like.

In a case in which the aryl group has a substituent, examples of the substituent include an alkoxy group having 1 to 8 carbon atoms, an alkyl group having 1 to 10 carbon atoms, a hydroxyl group, a halogen atom (a fluorine atom, a chlorine atom, an iodine atom, and the like), and the like.

In a case in which the R is an alkenyl group, the number of carbon atoms included in the alkenyl group is preferably 2 to 10, more preferably 2 to 6, and particularly preferably 2 to 4. The alkenyl group may have a straight chain structure, a branched structure, or a cyclic structure. Specific examples of the alkenyl group include an ethenyl group, a 1-propenyl group, a 2-propenyl group, a 2-methyl-1-propenyl group, a 1-butenyl group, a 2-butenyl group, a 3-butenyl group, a 3-methyl-2-butenyl group, a 1-pentenyl group, a 2-pentenyl group, a 3-pentenyl group, a 4-pentenyl group, a 4-methyl-3-pentenyl group, a 1-hexenyl group, a 3-hexenyl group, a 5-hexenyl group, a 1-heptenyl group, a 1-octenyl group, and the like.

In a case in which the alkenyl group has a substituent, examples of the substituent include an alkoxy group having 1 to 8 carbon atoms, an alkyl group having 6 to 14 carbon atoms, a hydroxyl group, a carboxylic group, a halogen atom (a fluorine atom, a chlorine atom, an iodine atom, and the like), and the like.

As the pyrrolidone derivative, the compound represented by the following general formula (P-1) is preferred.

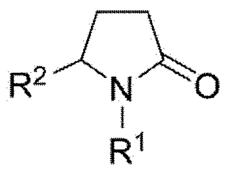

(P-1)

In the general formula (P-1), $R^1$ represents a hydrogen atom, an alkyl group, an aryl group, or an alkenyl group. The alkyl group, aryl group, and alkenyl group represented by $R^1$ are equivalent to the alkyl group, aryl group, and alkenyl group represented by R in the "structure including -CO-NR-," and the respective preferable aspects are also equivalent thereto.

$R^2$ represents a hydrogen atom or an alkyl group. The alkyl group represented by $R^2$ preferably has 1 to 10

carbon atoms, and may have any of a straight structure, a branched structure, and a cyclic structure. Specific examples of the alkyl group include groups equivalent to the alkyl group represented by R in the "structure including -CO-NR-."

$R^2$ is preferably a hydrogen atom or an alkyl group having 1 to 4 carbon atoms, and more preferably a hydrogen.

Among the compounds represented by the general formula (P-1), an aspect in which $R^1$ is a hydrogen atom or an alkyl group having 1 to 4 carbon atoms, and $R^2$ is a hydrogen atom or an alkyl group having 1 to 4 carbon atoms is preferred, and an aspect in which $R^1$ and $R^2$ are both a hydrogen atom is particularly preferred.

Examples of the pyrrolidone derivative in the invention include 2-pyrrolidone, N-methyl-2-pyrrolidone, N-ethyl-2-pyrrolidone, N-butyl-2-pyrrolidone, N-vinyl-2-pyrrolidone, 5-methyl-2-pyrrolidone, N-phenyl-2-pyrrolidone, N-cyclohexyl-2-pyrrolidone, N-hydroxyethyl-2-pyrrolidone, and the like. Among them, 2-pyrrolidone, N-methyl-2-pyrrolidone, N-ethyl-2-pyrrolidone, and N-methyl-2-pyrrolidone are preferred, 2-pyrrolidone and N-methyl-2-pyrrolidone are preferred, and 2-pyrrolidone is particularly preferred from the viewpoint of improvement in the abrasion resistance of images.

The content of the pyrrolidone derivative in the ink composition of the invention is preferably 3.0 mass% to 20.0 mass%, more preferably 5 mass% to 16 mass%, and particularly preferably 6 mass% to 15 mass% with respect to the total mass of the ink composition.

When the content of the pyrrolidone derivative is 3.0 mass% or more, the abrasion resistance of images can be further improved. In addition, when the content of the pyrrolidone derivative is 20.0 mass% or less, the ink composition has storage stability, which is advantageous.

In the invention, the content ratio (p/s; mass ratio) of the pyrrolidone derivative (p) to the structure (s) represented by the structural formula (I) as described below is preferably 0.075 to 4.0. When the content ratio p/s is 0.075 or more, the abrasion resistance of images can be further improved. In addition, when the content ratio p/s is 4.0 or less, the effect of preventing the strike-through phenomenon caused by permeation of the ink composition supplied to a recording medium toward the rear surface is strong, and such a content ratio is advantageous for curl suppression.

The content ratio p/s is more preferably in a range of 0.09 to 3.5, and particularly preferably in a range of 0.11 to 3.2 for the same reasons.

(Compound represented by the structural formula (I))

The invention contains at least one kind of the compounds represented by the structural formula (I). The compound represented by the structural formula (I) is an alkylene oxide adduct of glycerin which is represented by the following structure. When the compound is included in the ink composition, permeation of ink into a recording medium can be suppressed without significantly impairing the abrasion resistance of images.

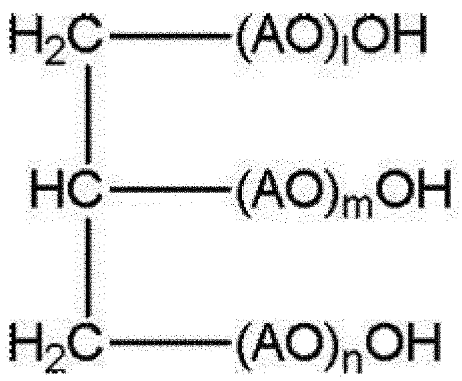

Structural Formula (I)

In the structural formula (I), 1, m, and n respectively represent an integer of 1 or more, and 1 + m + n satisfies 3 to 15. When the value of 1 + m + n is 3 or more, the effect of curl suppression is favorable, and when the value is 15 or less, favorable ejection properties are maintained. Among them, 1 + m + n is preferably in a range of 3 to 12, and more preferably in a range of 3 to 10. AO in the structural formula (I) represents ethyleneoxy (sometimes abbreviated as EO) and/or propyleneoxy (sometimes abbreviated as PO), and, among them, propylene oxy is preferred. The respective AOs, such as $(AO)_1$, $(AO)_m$, and $(AO)_n$, may be the same or different.

Hereinafter, examples of the compound represented by the structural formula (I) will be shown. Values in parentheses indicate SP values. However, in the invention, the compound is not limited thereto.

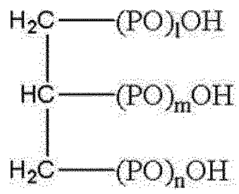

l+m+n=3 (26.4) PO = Propylene Oxy

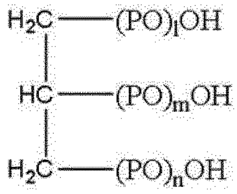

l+m+n=4 (24.9) PO = Propylene Oxy

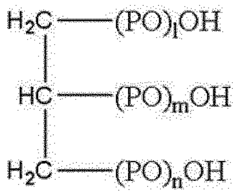

l+m+n=5 (23.9) PO = Propylene Oxy

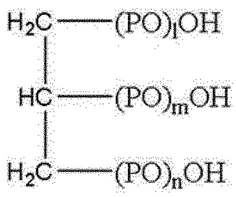

l+m+n=6 (23.2) PO = Propylene Oxy

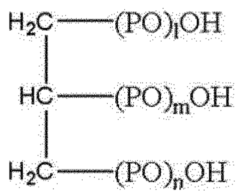

l+m+n=7 (22.6) PO = Propylene Oxy

· $nC_4H_{9O}(AO)_4$-H
(AO = EO or PO (EO : PO = 1 : 1), SP value = 20.1)
· $nC_4H_9O(AO)_{10}$-H
(AO = EO or PO (EO : PO = 1 : 1), SP value = 18.8)
· $HO(A'O)_{40}$-H
(A'O = EO or PO (EO : PO = 1 : 3), SP value = 18.7)
· $HO(A''O)_{55}$-H
(A"O = EO or PO (EO : PO = 5 : 6), SP value = 18.8)
· $HO(PO)_3$-H (SP value = 24.7)
· $HO(PO)_7$-H (SP value = 21.2)
· 1,2-hexanediol (SP value = 27.4)

Meanwhile, EO and PO respectively indicate an ethyleneoxy group and a propyleneoxy group.

As the alkylene oxide adduct of glycerin, a released commercially available product may be used. Examples of polyoxy propylated glycerin (ether of polypropylene glycerin and glycerin) include SANNIX GP-250 (average molecular weight of 250), SANNIX GP-400 (average molecular weight of 400), SANNIX GP-600 (average molecular weight of 600)

[all manufactured by Sanyo Chemical Industries, Ltd.], LEOCON GP-250 (average molecular weight of 250), LEOCON GP-300 (average molecular weight of 300), LEOCON GP-400 (average molecular weight of 400), LEOCON GP-700 (average molecular weight of 700) [manufactured by Lion Corporation], polypropylene triol glycol type (average molecular weight of 300, average molecular weight of 700) [manufactured by Wako Pure Chemical Industries Ltd.], and the like.

Meanwhile, the SP value (a solubility parameter/ unit: $(cal/cm^3)^{1/2}$) is a value expressed by the square root of the molecular aggregation energy, and is computed by the method as described in Polymer Engineering Science, 14, R. F. Fedors, pages 147 to 154 (1974).

The SP value is preferably in a range of 27.5 or less.

In addition, the ink composition may further include a water-soluble organic solvent other than the compound represented by the structural formula (I). In this case, the ink composition preferably includes 70 mass% or more of the total amount of the compound represented by the structural formula (I) and the other water-soluble organic solvent, and, preferably has a SP value of 27.5 or more. When the SP value is 27.5 or less, occurrence of curls under a variety of environmental humidity conditions after formation of images is further suppressed. In addition, when the resin particles as described below are included, the compound represented by the structural formula (I) and the other water-soluble organic solvent interact with the resin particles so as to improve the fixing properties, and, particularly, when a large amount of components having a relatively low SP value (≤ 27.5) as described above is included, it is possible to further improve the abrasion resistance of images. In addition, inclusion of a large amount of components having a relatively low SP value (≤ 27.5) is effective for suppressing offsetting.

The content of the compound represented by the structural formula (I) is preferably 5.0 mass% to 40.0 mass%, more preferably 7.0 mass% to 35.0 mass%, and particularly preferably 8.0 mass% to 30.0 mass% with respect to the total mass of the ink composition.

When the content of the compound represented by the structural formula (I) is 5.0 mass% or more, the permeability of the ink composition into a recording medium is alleviated, and the strike-through of ink is further prevented.

The other water-soluble organic solvent includes the water-soluble organic solvents as described in paragraphs [0036] to [0039] in JP2009-190379A, and any solvent from them may be appropriately selected and used.

(Resin particles)

The ink composition in the invention preferably further contains at least one kind of resin particles. When the resin particles are included, the abrasion resistance of images can be further improved by carrying out a thermal treatment or the like after formation of images.

The resin particles are preferably self-dispersible resin particles having a hydrophilic constituent unit (a repetitive unit derived from a hydrophilic monomer) and a hydrophobic constituent unit (a repetitive unit derived from a hydrophobic monomer), and more preferably are self-dispersible resin particles which include a hydrophilic constituent unit and a hydrophobic constituent unit, and have a glass transition temperature (Tg) of 80°C or higher since the abrasion resistance can be further enhanced. Tg of 80°C or higher indicates that the self-dispersible resin particles are hydrophobic. When the Tg of the resin particles being included is 80°C or higher, the fixing properties to a recording medium and rub fastness of the ink composition are improved.

In addition, the Tg of the resin particles is more preferably 100°C to 300°C, still more preferably 130°C to 250°C, and particularly preferably 160°C to 200°C. When the glass transition temperature of the resin particles is 300°C or lower, the rub fastness of recorded images is more effectively improved.

Meanwhile, the Tg is a value measured under ordinary measurement conditions using a differential scanning calorimeter (DSC) EXSTAR6220 (manufactured by SII Nano Technology Inc.). However, in a case in which measurement is difficult due to decomposition or the like of the resin, a calculated Tg that is computed from the following calculation formula is applied. The calculated Tg is calculated using the following formula (1).

$$1/Tg = \Sigma(X_i / Tg_i) \qquad \cdots (1)$$

Here, a polymer, which is a measurement object, is considered to have n kinds of monomer components from i = 1 to n. $X_i$ represents the mass fraction of the $i^{th}$ monomer ($\Sigma X_i = 1$), and $Tg_i$ represents the glass transition temperature (absolute temperature) of a polymer composed only of the $i^{th}$ monomer. Meanwhile, $\Sigma$ indicates the sum of i = 1 to n. In addition, the value ($Tg_i$) of the glass transition temperature of a polymer composed only of each of the monomers is a value employed from Polymer Handbook (3rd Edition), E. H. Immergut, (published by Wiley-Interscience, 1989).

The resin particles include latexes, such as an acrylic resin, a vinyl acetate-based resin, a styrene-butadiene-based resin, a vinyl chloride-based resin, an acryl-styrene-based resin, a butadiene-based resin, a styrene-based resin, a crosslinked acrylic resin, a crosslinked styrene-based resin, a benzoguanamine resin, a phenol resin, a silicone resin,

an epoxy resin, a urethane-based resin, a paraffin-based resin, and a fluorine-based resin. Among them, the particles of an acrylic resin, an acryl-styrene-based resin, a styrene-based resin, a crosslinked acrylic resin, and a crosslinked styrene-based resin can be preferable examples.

The weight average molecular weight of the resin particles is preferably 10000 to 200000, and more preferably 100000 to 200000 from the viewpoint of the stability of the ink composition.

The average particle diameter of the resin particles is preferably in a range of 10 nm to 1 μm, more preferably 10 nm to 200 nm, still more preferably 20 nm to 100 nm, and particularly preferably 20 nm to 50 nm.

The resin particles can be used in a dispersed state, such as a latex.

In a case in which the resin particles are included, the amount of the resin particles in the ink composition is preferably 0.5 mass% to 20 mass%, more preferably 3 mass% to 20 mass%, and still more preferably 5 mass% to 15 mass% in terms of the solid content with respect to the total mass of the ink composition from the viewpoint of fixing properties, rub fastness, and the viscosity of the ink composition.

(Water)

The ink composition of the invention contains water, and the amount of water is not particularly limited. Among them, the amount of water is preferably 10 mass% to 99 mass%, more preferably 20 mass% to 80 mass%, still more preferably 30 mass% to 70 mass%, and particularly preferably 40 mass% to 60 mass% with respect to the total mass of the ink composition from the viewpoint of stability and securing ejection reliability.

The water is preferably pure water or ultrapure water which is almost free of ionic impurities, such as ion-exchange water, extracorporeal ultrafiltrated water, reverse osmosis water, and diffused water. In addition, when water sterilized by irradiation of ultraviolet rays, addition of hydrogen peroxide, or the like is used, occurrence of fungus or bacteria is prevented in a case in which the pigment-dispersed liquid and the ink composition in which the pigment-dispersed liquid is used are stored for a long period of time, which is preferred.

(Other components)

In addition to the above components, the ink composition of the invention can further contain additives, such as a permeation solvent, a moisturizer, a preservative, an antifungal agent, a pH adjuster, and a chelator, as other components according to necessity. The details of the additives can be referenced from the description in [0067] to [0076] of JP2010-90266A.

(Recording medium)

A recording medium that is used in the image forming method of the invention is not particularly limited, and may be any of plain paper and ink jet paper.

- Drying process -

The image forming method of the invention may be provided with a drying process in which the ink supplied in the ink supplying process is dried. Drying vaporizes and disperses liquid media that are included in the ink composition attached to a recording medium, specifically, water, the pyrrolidone derivative, and other water-soluble organic solvent, and forms a colored resin membrane. Thereby, high-quality images having few image defects, such as damage or peeling, can be formed on a recording medium at a high speed.

Drying by heating can be carried out using a well-known heating unit, such as a heater, an air-blowing unit in which air blowing is used, such as a dryer, or a unit in which the above units are combined. Examples of the heating method include a method in which heat is supplied from the ink-supplied surface and the opposite surface using a heater (specifically, a method in which, for example, warm air is blown to the ink-supplied surface, and the opposite surface of the ink-supplied surface is heated using a heater drum), a method in which warm air or hot air strikes against the ink-supplied surface of a recording medium, a heating method in which an infrared heater is used, and the like. A combination of a plurality of the above methods may be used as the heating method.

The temperature during the drying by heating is not particularly limited, and may be any temperature as long as the temperature falls in a temperature range in which the ink can be dried. For example, heating may be carried out through air blowing so that the temperature of a recording medium becomes 40°C to 80°C, or drying may be carried out by bringing a recording medium into contact with a drying drum of 50°C to 110°C so that the temperature of the recording medium becomes 40°C to 80°C. In addition, both methods may be jointly used to dry the ink.

- Cooling process -

The image forming method of the invention may be provided with a cooling process in which the recording medium that has been once heated and dried in the drying process is cooled.

The cooling method may be any method as long as the temperature of the recording medium can be actively lowered in the cooling process. Examples of the cooling method include a method in which a recording medium is made to pass through a cooling zone, a method in which cold air strikes against a recording medium, a method in which a recording medium is brought into contact with a cooled object, and the like.

- Fixing-by-heating process -

The image forming method of the invention may be further provided, according to necessity, with a fixing-by-heating process in which the ink composition on the recording medium is fixed by heating after the ink supplying process. In the fixing-by-heating process, images formed by supply of the ink composition are heated and fixed to the recording medium. A fixing-by-heating treatment can fix images to the recording medium, and further improve the rub fastness of the images.

Heating is preferably carried out at a temperature of, for example, the minimum filming temperature (MFT) of the resin particles in images or higher. When the recording medium is heated to the MFT or higher, the particles form a membrane so as to strengthen images. Pressurization may be carried out together with heating. In a case in which heating is carried out together with pressurization, the pressure during the pressurization is preferably in a range of 0.1 MPa to 3.0 MPa in terms of smoothing of the surface.

A method of heating is not particularly limited, and preferably includes a method in which drying is carried out in a non-contact manner, such as a method in which heating is carried out using a heating element, such as a nichrome-ray heater, a method in which warm air or hot air is supplied, a method in which heating is carried out using a halogen lamp, an infrared lamp, or the like. In addition, a method of heating and pressurization is not particularly limited, and preferable examples thereof include a method in which a recording medium is fixed by heating in a contact manner, such as a method in which a hot plate is pressed on the image-formed surface of a recording medium, a method in which a recording medium is made to pass through a pair of rollers using a heating and pressurization apparatus having a pair of heating and pressurization rollers, a pair of heating and pressurization belts, or a heating pressurization belt arranged on the image-recorded surface of the recording medium and a supporting roller arranged on the opposite side, and the like.

[Examples]

Hereinafter, the invention will be described in more detail using examples, but the invention is not limited to the following examples within the scope of the purport of the invention. Meanwhile, "parts" are based on mass unless otherwise described.

- Synthesis of a water-soluble resin (dispersant) P-

187.5 parts of isopropanol was heated to 80°C under a nitrogen atmosphere, and a liquid mixture obtained by mixing 478 parts of methyl methacrylate, 172 parts of methacrylic acid, 350 parts of 2-ethyl hexyl methacrylate, and 22.05 parts of 2,2'-azobis(2-methylbutyronitrile) was added dropwise thereto over 2 hours. After completion of the dropwise addition, the mixture was further maintained at 80°C for 4 hours, and then cooled to 25°C. The solvent was evaporated under reduced pressure so as to obtain an aqueous solution of a water-soluble resin (dispersant) P having an average molecular weight of approximately 30,000 and an acid value of 154 mgKOH/g.

Meanwhile, other water-soluble resins in the invention could be synthesized in the same manner as above.

- Preparation of a dispersed substance N of a non-crosslinked resin-coated pigment -

150 parts of the water-soluble resin P obtained in the above was dissolved in water, and an aqueous solution of the water-soluble resin P was prepared using an aqueous solution of potassium hydroxide so that the aqueous solution afterneutralization had a pH of 10.1 and a concentration of the water-soluble resin P of 30.6 mass%.

90 parts of a pigment blue 15:3 (manufactured by Dainichiseika Color & Chemicals Mfg. Co., Ltd., phthalocyanine blue A220) and 362 parts of water were mixed with 147 parts of the obtained aqueous solution of the water-soluble resin P, and dispersion was carried out for 3 hours using a beads mill (0.1 mmϕ zirconia beads), thereby obtaining a dispersed substance N of a non-crosslinked resin coated-pigment having a concentration of the pigment of 15 mass%.

- Preparation of a dispersed substance 1 of a crosslinked resin-coated pigment -

Next, 0.35 parts of polyethylene glycol diglycidyl ether was added to 70 parts of the dispersed substance N of the non-crosslinked resin-coated pigment obtained in the above, and reacted with each other at 50°C for 6.5 hours, subsequently cooled to 25°C. Thereby, a dispersed substance 1 of a crosslinked resin-coated pigment having a pigment concentration o 14.9 mass% was obtained.

[Example 1]

- Preparation of Specimen 101 -

The "dispersed substance 1 of the crosslinked resin-coated pigment" obtained in the above and the following components were mixed at the following amounts, and then filtered using a 5 μm membrane filter, thereby preparing Specimen 101 (ink composition).

<Composition>

(1) The dispersed substance 1 of the crosslinked resin-coated pigment ··· 27.0 parts
(2) An alkylene oxide adduct of glycerin [a compound represented by the above structural formula (I) (AO: propylene oxy, 1 + m + n ≅ 9), SP value: 21.7] ··· 18.0 parts
(3) 2-Pyrrolidone (manufactured by ISP Japan Ltd.) ··· 8.0 parts
(4) Olfine E1010 (manufactured by Nissin Kagaku Co., Ltd.) ··· 1.0 part
(5) Ion-exchange water ··· remaining amount (an amount that makes the total amount of 100)

- Preparation of Specimens 102 to 110 -

Specimens 102 to 110 (ink compositions) were prepared in the same manner as for Specimen 101 except that the compositions thereof were changed to those shown in the following Table 1 in the preparation of Specimen 101.

- Preparation of Specimen 111 -

Specimen 111 (ink composition) of a comparative example was prepared in the same manner as for Specimen 101 except that the composition thereof was changed to those shown in the following Table 1 in the preparation of Specimen 101.

- Preparation of Specimen 112 -

Specimen 112 (ink composition) of a comparative example was prepared in the same manner as for Specimen 101 except that the composition thereof was changed to those shown in the following Table 1 in the preparation of Specimen 101.

- Image formation -

The respective specimens (ink compositions) as prepared in the above manner were sequentially loaded in a cartridge having a DIMATIX MATERIAL PRINTER DMP-2831, manufactured by Fujifilm Dimatix Inc., and images were formed on the recording medium that was transported at a transportation speed in the vertical scanning direction of 100 m/min. The following evaluation was carried out on the formed images.

The images were formed by using a cartridge for 10 pl ejection (DMC-11610) as the cartridge, and modifying the printer such that a liquid could be supplied to the cartridge from the outside and the liquid could be rendered at a transportation speed of 100 m/min. During the rendering of images, IJ-PDW70 of Mitsubishi Paper Mills Limited and Npi Form NEXT-IJ70 of Nippon Paper Industries Co., Ltd. were used as ink jet paper, and Npi Form 55 of Nippon Paper Industries Co., Ltd. was used as plain paper.

- Evaluation -

(1) Abrasion resistance

Ordinary characters of 「優、並、劣」(all of which are Japanese Kanjis) and images composed of hollow letters of「優、並、劣」were rendered on the respective paper of IJ-PDW70 (manufactured by Mitsubishi Paper Mills Limited) and Npi Form NEXT-IJ70 (manufactured by Nippon Paper Industries Co., Ltd.), which were ink jet paper, at an ink apply amount of 6 g/$m^2$. After 1 hour passed from the rendering, the recording media having printed letters and images were folded with the image-rendered surface inside, and the image-rendered surface was abraded with each other 20 times while the folded recording medium was pressed using a pressure of 0.09 kg/$cm^2$. The above operation was carried out 10 times for the respective papers, 5 evaluators carried out sensory evaluation according to the following evaluation criteria, and average scores of the 5 evaluators were obtained, and used as an evaluation index. The evaluation results are shown in the following Table 1.

<Evaluation criteria>

5: Images did not become blurred or exhibit bleeding for both the ordinary letters and the hollow letters, and favorable image qualities were obtained.
4: Images became slightly blurred or exhibited bleeding for both the ordinary letters and the hollow letters, but the image qualities were on practically permissible levels.
3: Images became occasionally blurred or exhibited bleeding for both the ordinary letters and the hollow letters, but the letters were readable, and had practically permissible qualities.
2: Images became blurred or exhibited bleeding for both the ordinary letters and the hollow letters, and, particularly, the hollow letters were not readable due to bleeding such that the image qualities might lead to practical problems.
1: Images became blurred or exhibited bleeding for both the ordinary letters and the hollow letters, and both the ordinary letters and the hollow letters were not readable due to bleeding such that the image qualities might lead to practical problems.

(2) Curl characteristics

Data images that are actually used in the form field were imagined, and images including solid images and letter images were rendered on the respective paper of Npi Form NEXT-IJ70, which is an ink jet paper, and Npi Form 55 (Nippon Paper Industries Co., Ltd.), which is plain paper. After the rendering, the images were cut into 254 mm x 127 mm, allowed to stand under conditions of at a temperature of 25°C and a humidity of 55%RH for 24 hours, and 5 evaluators carried out sensory evaluation of curl characteristics according to the following evaluation criteria, average scores of the 5 evaluators were obtained, and used as an evaluation index. The evaluation results are shown in the following Table 1.

<Evaluation criteria>

5: A level on which few curls could be observed, and the images were in a state of being usable with no problem.
4: A level in which a few curls could be observed, and the images were in a state of being usable with no serious problem.
3: A level in which curls could be observed, but the images were in a practically permissible range.
2: A level in which curls could be observed such that the image qualities might lead to practical problems.
1: A level in which curls could be easily observed such that the image qualities might lead to practical problems.

(3) Strike-through

Solid images were formed on Npi Form 55 (Nippon Paper Industries Co., Ltd.), which is plain paper, so that the concentration became 1.0. The images were visually observed from the rear surface, and 5 evaluators carried out evaluation according to the following evaluation criteria, average scores of the 5 evaluators were obtained, and used as

an evaluation index. The evaluation results are shown in the following Table 1. Meanwhile, the concentration was measured using a color reflection spectrodensitometer (manufactured by X-Rite, X-RITE 530).

<Evaluation criteria>

5: A level on which boundaries between solid image portions and white background portions could not be completely recognized on the rear surface, and images could be rendered on both surfaces with no problem.
4: A level on which boundaries between solid image portions and white background portions could not be significantly recognized on the rear surface, and images could be rendered on both surfaces with no problem.
3: A level on which boundaries between solid image portions and white background portions could be recognized on the rear surface, and images rendered on both surfaces were in a practically permissible range.
2: Pigments permeated up to the rear surface at some solid image portions on the rear surface, and a problem might be caused in a case in which the ink composition was used to render images on both surfaces.
1: Pigments permeated up to the rear surface at most of solid image portions on the rear surface, the ink composition was not appropriate for rendering on both surfaces, and a problem might be caused.

[Table 1]

| Sample | Composition | | | | | | Evaluation results | | | Note |
|---|---|---|---|---|---|---|---|---|---|---|
| | Pigment | Alkylene oxide adduct of glycerin (compound of structural formula (I)) | | Pyrrolidone derivative | | Ratio p/s (*1) | Abrasion resistance | Curl characteristics | Strike-through | |
| | | Type | Added amount [mass%] | Type | Added amount [mass%] | | | | | |
| Specimen 101 | Crosslinking pigment | AO = propylene oxy 1 + m + n ≅ 9 | 18 | 2-Pyrrolidone | 8 | 0.44 | 4.6 | 4.8 | 4.8 | Invention |
| Specimen 102 | Crosslinking pigment | AO = propylene oxy 1 + m + n ≅ 9 | 10 | 2-Pyrrolidone | 17 | 1.7 | 4.8 | 4.6 | 4.6 | Invention |
| Specimen 103 | Crosslinking pigment | AO = propylene oxy 1 + m + n ≅ 9 | 35 | 2-Pyrrolidone | 4 | 0.11 | 4.2 | 4.6 | 4.8 | Invention |
| Specimen 104 | Crosslinking pigment | AO = propylene oxy 1 + m + n ≅ 9 | 15 | 2-Pyrrolidone | 12 | 0.8 | 4.8 | 4.6 | 4.8 | Invention |
| Specimen 105 | Crosslinking pigment | AO = propylene oxy 1 + m + n ≅ 9 | 6 | 2-Pyrrolidone | 19 | 3.2 | 4.8 | 4.2 | 4.4 | Invention |
| Specimen 106 | Crosslinking pigment | AO = propylene oxy 1 + m + n ≅ 9 | 3 | 2-Pyrrolidone | 22 | 7.3 | 3.8 | 2.4 | 2.8 | Invention |
| Specimen 107 | Crosslinking pigment | AO = propylene oxy 1 + m + n ≅ 9 | 34 | 2-Pyrrolidone | 1 | 0.029 | 2.6 | 3.4 | 3.2 | Invention |
| Specimen 108 | Crosslinking pigment | AO = propylene oxy 1 + m + n ≅ 3 | 18 | 2-Pyrrolidone | 8 | 0.44 | 4.6 | 4.2 | 4.4 | Invention |
| Specimen 109 | Crosslinking pigment | AO = propylene oxy 1 + m + n ≅ 5 | 18 | 2-Pyrrolidone | 8 | 0.44 | 4.4 | 4.8 | 4.4 | Invention |

(continued)

| Sample | Composition | | | | | | Evaluation results | | | Note |
|---|---|---|---|---|---|---|---|---|---|---|
| | Pigment | Alkylene oxide adduct of glycerin (compound of structural formula (I)) | | Pyrrolidone derivative | | Ratio p/s (*1) | Abrasion resistance | Curl characteristics | Strike-through | |
| | | Type | Added amount [mass%] | Type | Added amount [mass%] | | | | | |
| Specimen 110 | Crosslinking pigment | AO = propylene oxy 1 + m + n ≅ 14 | 18 | 2-Pyrrolidone | 8 | 0.44 | 4.4 | 3.8 | 4.2 | Invention |
| Specimen 111 | Crosslinking pigment | AO = propylene oxy 1 + m + n ≅ 9 | 25 | - | | | 1.0 | 3.2 | 2.4 | Comparative |
| Specimen 112 | Crosslinking pigment | None | - | 2-pyrrolidone | 8 | - | 2.2 | 1.0 | 1.0 | Comparative |
| * 1: The content ratio of pyrrolidone derivatives (p) to the compound (s) represented by the structural formula (1) | | | | | | | | | | |

[Example 2]

Specimens 201 to 205 were manufactured in the same manner as in Example 1 except that the 2-pyrrolidone in the composition of Specimen 101 was changed as shown in the following Table 2 in Example 1.

[Table 2]

| Sample | Pyrrolidone derivative | Note |
|---|---|---|
| Specimen 101 | 2-Pyrrolidone | Invention |
| Specimen 201 | N-Methyl-2-pyrrolidone | Invention |
| Specimen 202 | N-Ethyl-2-pyrrolidone | Invention |
| Specimen 203 | N-Butyl-2-pyrrolidone | Invention |
| Specimen 204 | N-Vinyl-2-pyrrolidone | Invention |
| Specimen 205 | 5-Methyl-2-pyrrolidone | Invention |

The abrasion resistance, curl characteristics, and strike-through of the respective specimens in Table 2 were evaluated in the same manner as in Example 1. The same effects for improving the abrasion resistance, the curl characteristics, and the strike-through as in Specimen 101 of Example 1 were observed in Specimens 201 to 205. In comparison including Specimen 101, Specimen 101 was slightly better than Specimens 201 to 205.

[Example 3]

Specimen 301 was manufactured in the same manner as in Example 1 except that the crosslinked pigment (the dispersed substance 1 of a crosslinked resin-coated pigment) in the composition of Specimen 101 was changed to the dispersed substance N of a non-crosslinked resin-coated pigment.

The abrasion resistance, curl characteristics, strike-through were evaluated for the obtained specimen 301 in the same manner as in Example 1. As a result, the same effects for improving the abrasion resistance, the curl characteristics, and the strike-through as in Specimen 101 of Example 1 were observed in Specimen 301. In comparison including Specimen 101, Specimen 101 was excellent from the viewpoint of the dispersion stability as an ink composition.

- Dispersion stability -

Meanwhile, the ink compositions, such as the manufactured Specimen 101, were stored in a constant-temperature vessel at 60°C for 14 days, the particle diameters and viscosities were measured after completion of the storage, and the dispersion stability was evaluated to be more favorable as the range of the change in the particle diameters and the change in the viscosities before and after the storage were smaller. The particle diameters and the viscosities were measured under conditions of 25°C using a NANOTRAC particle size distribution measurement apparatus UPA-EX150 (manufactured by Nikkiso Co., Ltd.) and a VISCOMETER TV-22 (manufactured by Toki Sangyo Co., Ltd.) respectively. Particularly, the measurement results of the viscosities are shown in the following Table 3.

[Table 3]

| | Immediately after preparation of the liquid (mPa·s) | 60°C, after 14 days (mPa·s) |
|---|---|---|
| Specimen 101 | 6.4 | 6.1 |
| Specimen 301 | 6.5 | 4.4 |

[Example 4]

Specimen 401 was manufactured by further adding the following LATEX PL-01 to the composition of Specimen 101 so as to produce the following composition, mixing the respective components, and then filtering the composition using a 5 μm membrane filter in Example 1.

<Composition>

(1) The dispersed substance 1 of the crosslinked resin-coated pigment ··· 27.0 parts
(2) An alkylene oxide adduct of glycerin [a compound represented by the above structural formula (I) (AO: propylene oxy, 1 + m + n ≅ 9)] ··· 18 parts
(3) 2-Pyrrolidone (manufactured by ISP Japan Ltd.) ··· 8.0 parts
(4) The following LATEX PL-01 ··· 20.0 parts
(5) Olfine E1010 (manufactured by Nissin Kagaku Co., Ltd.) ··· 1.0 part
(6) Ion-exchange water ··· remaining amount (an amount that makes the total amount of 100)

~ Preparation of LATEX ~

19.8 g of LATEMUL ASK (manufactured by Kao Corporation, a carboxylate-based emulsifier), 6 g of an aqueous solution of 5 mol/L sodium hydroxide, and 0.3 g of 2,2'-azobis(2-amidinopropane)dihydrochloride were added to 120 g of water, and uniformly dissolved. The solution was heated to 70°C, and a monomer mixture of 25.9 g of styrene, 26.3 g of butylacrylate, and 5.1 g of acrylic acid was added over 2 hours under a nitrogen stream. After that, the solution was heated at 70°C for 2 hours and 80°C for 3 hours. After the solution was cooled to room temperature, an aqueous solution of 1 mol/L sodium hydroxide was added while being stirred so as to obtain a pH of approximately 9, thereby preparing LATEX PL-01.

The volume average particle diameter of resin particles in the obtained LATEX was 115 nm. In addition, the solid content of LATEX PL-01 was 33 mass%.

The abrasion resistance, curl characteristics, and strike-through were evaluated for the obtained specimen 401 in the same manner as in Example 1. As a result, the same effects for improving the abrasion resistance, the curl characteristics, and the strike-through as in Specimen 101 of Example 1 were observed in Specimen 401.

Meanwhile, in Specimen 401, additional improvement in the abrasion resistance was observed in a case in which Specimen 401 was supplied to a recording medium, and then heated.

## Claims

1. An image forming method comprising an ink supplying process for supplying an ink composition including a pigment, a pyrrolidone derivative, a compound represented by the following structural formula (I), and water to a recording medium being transported at a transportation speed of 80 m/min or more so as to form images,

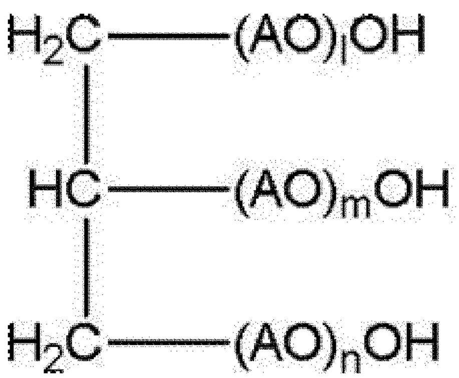

Structural Formula (I)

wherein: l, m and n are respectively an integer of 1 or more and l + m + n indicates 3 to 15 and AO represents at least one of ethyleneoxy and propyleneoxy.

2. The image forming method according to Claim 1, wherein the content ratio (p/s; mass ratio) of the pyrrolidone derivative (p) to the compound (s) represented by the structural formula (I) is 0.075 to 4.0.

3. The image forming method according to Claim 1 or 2, wherein the pyrrolidone derivative is at least one of 2-pyrrolidone and N-methyl-2-pyrrolidone.

4. The image forming method according to any one of Claims 1 to 3, wherein AO in the structural formula (I) is propylene oxy.

5. The image forming method according to any one of Claims 1 to 4, wherein the pigment is a resin-coated pigment being coated at least a part of the pigment surface with a crosslinked polymer obtained by crosslinking a water-soluble resin with a crosslinking agent.

6. The image forming method according to Claim 5, wherein the water-soluble resin includes a carboxylic group or a salt of the carboxylic group in the molecule, and the crosslinking agent is a bifunctional or more epoxy compound.

7. The image forming method according to any one of Claims 1 to 6, wherein the content of the compound represented by the structural formula (I) is 5.0 mass% to 40.0 mass% with respect to the total mass of the ink composition.

8. The image forming method according to any one of Claims 1 to 7, wherein the content of the pyrrolidone derivative is 3.0 mass% to 20.0 mass% with respect to the total mass of the ink composition.

9. The image forming method according to any one of Claims 1 to 8, wherein the ink composition further includes resin particles.

**Patentansprüche**

1. Abbildungs-Erzeugungsverfahren aufweisend ein Tinten-Zuführverfahren zum Zuführen einer Tintenzusammensetzung, die ein Pigment, ein Pyrrolidon-Derivat, eine Verbindung, die durch die folgende Strukturformel (I) repräsentiert wird, und Wasser enthält, zu einem Aufzeichnungsmedium, das mit einer Transportgeschwindigkeit von 80 m/min oder mehr transportiert wird, um Abbildungen zu erzeugen,

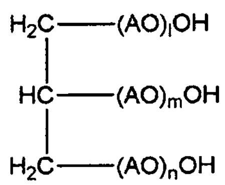

Strukturformel (I)

worin l, m und n jeweils eine ganze Zahl von 1 oder mehr sind und l + m + n 3 bis 15 bedeutet und AO Ethylenoxy und/oder Propylenoxy repräsentiert.

2. Abbildungs-Erzeugungsverfahren nach Anspruch 1, bei dem das Verhältnis der Gehalte (p/s; Massenverhältnis) an dem Pyrrolidon-Derivat (p) und an der Verbindung (s), die durch die Strukturformel (I) repräsentiert wird, 0,075 bis 4,0 beträgt.

3. Abbildungs-Erzeugungsverfahren nach Anspruch 1 oder 2, bei dem das Pyrrolidon-Derivat 2-Pyrrolidon und/oder N-Methyl-2-pyrrolidon ist.

4. Abbildungs-Erzeugungsverfahren nach einem der Ansprüche 1 bis 3, bei dem AO in der Strukturformel (I) Propylenoxy ist.

5. Abbildungs-Erzeugungsverfahren nach einem der Ansprüche 1 bis 4, bei dem das Pigment ein harzbeschichtetes Pigment ist, wobei mindestens ein Teil der Pigmentoberfläche mit einem vernetzten Polymer, das durch Vernetzen eines wasserlöslichen Harzes mit einem Vernetzungsmittel erhalten wurde, beschichtet ist.

6. Abbildungs-Erzeugungsverfahren nach Anspruch 5, bei dem das wasserlösliche Harz eine Carboxylgruppe oder ein Salz der Carboxylgruppe in dem Molekül enthält, und das Vernetzungsmittel eine bifunktionelle oder mehrfunktionelle Epoxyverbindung ist.

7. Abbildungs-Erzeugungsverfahren nach einem der Ansprüche 1 bis 6, bei dem der Gehalt an der Verbindung, die durch die Strukturformel (I) repräsentiert wird, 5,0 Masseprozent bis 40,0 Masseprozent bezüglich der Gesamtmasse der Tintenzusammensetzung beträgt.

8. Abbildungs-Erzeugungsverfahren nach einem der Ansprüche 1 bis 7, bei dem der Gehalt an dem Pyrrolidon-Derivat 3,0 Masseprozent bis 20,0 Masseprozent bezüglich der Gesamtmasse der Tintenzusammensetzung beträgt.

9. Abbildungs-Erzeugungsverfahren nach einem der Ansprüche 1 bis 8, bei dem die Tintenzusammensetzung außerdem Harzpartikel enthält.

**Revendications**

1. Procédé de formation d'image, comprenant un processus de d'alimentation en encre destiné à alimenter une composition d'encre incluant un pigment, un dérivé de pyrrolidone, un composé représenté par la formule structurale suivante (I) et de l'eau, vers un support d'enregistrement transporté à une vitesse de transport de 80 m/min ou plus de manière à former des images,

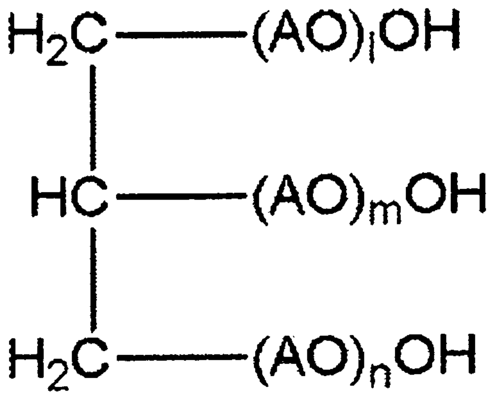

Formule structurale (I)

où

l, m et n sont respectivement un entier supérieur ou égal à 1, et 1 + m + n indique de 3 à 15, et AO représente au moins un éthylèneoxy et un propylèneoxy.

2. Procédé de formation d'image selon la revendication 1, dans lequel le rapport des teneurs (p/s ; rapport de masse) entre le dérivé de pyrrolidone (p) et le composé (s) représenté par la formule structurale (I) est compris dans une plage allant de 0,075 à 4,0.

3. Procédé de formation d'image selon la revendication 1 ou 2, dans lequel le dérivé de pyrrolidone est au moins un élément parmi la 2-pyrrolidone et la N-méthyl-2-pyrrolidone.

4. Procédé de formation d'image selon l'une quelconque des revendications 1 à 3, dans lequel AO dans la formule structurale (I) est propylèneoxy.

5. Procédé de formation d'image selon l'une quelconque des revendications 1 à 4, dans lequel le pigment est un pigment à revêtement de résine recouvrant au moins une partie de la surface de pigment avec un polymère réticulé obtenu par réticulation d'une résine soluble dans l'eau avec un agent de réticulation.

6. Procédé de formation d'image selon la revendication 5, dans lequel la résine soluble dans l'eau inclut un groupe carboxylique ou un sel du groupe carboxylique dans la molécule, et l'agent de réticulation est un composé époxy bifonctionnel ou plus.

7. Procédé de formation d'image selon l'une quelconque des revendications 1 à 6, dans lequel la teneur du composé représenté par la formule structurale (I) est comprise dans une plage allant de 5,0 % en masse à 40,0 % en masse par rapport à la masse totale de la composition d'encre.

8. Procédé de formation d'image selon l'une quelconque des revendications 1 à 7, dans lequel la teneur du dérivé de pyrrolidone est comprise dans une plage allant de 3,0 % en masse à 20,0 % en masse par rapport à la masse totale de la composition d'encre.

9. Procédé de formation d'image selon l'une quelconque des revendications 1 à 8, dans lequel la composition d'encre inclut en outre des particules de résine.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009191135 A
- JP 2005082613 A
- WO 2001048101 A
- JP 4018465 A
- JP H418465 A
- JP 2004051779 A
- JP 2003306623 A
- JP 9151342 A
- JP H9151342 A
- JP 10140065 A
- JP H10140065 A
- JP 11209672 A
- JP H11209672 A
- JP 11172180 A
- JP H11172180 A
- JP 10025440 A
- JP H1025440 A
- JP 11043636 A
- JP H1143636 A
- JP 2009190379 A
- JP 2010090266 A


### Non-patent literature cited in the description


- **R. F. FEDORS.** *Polymer Engineering Science,* 1974, vol. 14, 147-154
- **E. H. IMMERGUT.** Polymer Handbook. Wiley-Interscience, 1989